# EUROPÄISCHE PATENTSCHRIFT

(11) **EP 3 418 701 B1**
(45) Veröffentlichungstag und Bekanntmachung des Hinweises auf die Patenterteilung: **25.09.2024**
(21) Anmeldenummer: 18177724.4
(22) Anmeldetag: 14.06.2018
(51) Int. Cl.: G01F 23/284

(54) **FÜLLSTANDREFLEKTOMETER MIT VERÄNDERBAREM MESSABLAUF**
FILL LEVEL REFLECTOMETER WITH VARIABLE MEASUREMENT SEQUENCE
RÉFLECTOMÈTRE DE NIVEAU DE REMPLISSAGE À DÉROULEMENT DE MESURE MODIFIABLE

(30) Priorität: 21.06.2017 DE 102017210382; 21.06.2017 DE 102017210383; 21.06.2017 DE 102017210381; 21.06.2017 DE 102017210402; 21.06.2017 EP 17177111; 21.06.2017 EP 17177147
(43) Veröffentlichungstag der Anmeldung: 26.12.2018
(73) Patentinhaber: VEGA Grieshaber KG, 77709 Wolfach (DE)
(72) Erfinder: WELLE, Roland, 77756 Hausach (DE); GRIESSBAUM, Karl, 77796 Mühlenbach (DE)
(74) Vertreter: Maiwald GmbH

(56) Entgegenhaltungen:
- EP-A2- 0 875 772
- EP-A2- 2 293 096
- EP-A2- 2 631 612
- US-A1- 2015 253 176

## Beschreibung

### Gebiet der Erfindung

Die Erfindung betrifft die Füllstandmesstechnik. Insbesondere betrifft die Erfindung ein Füllstandmessgerät, das zur Füllstandmessung nach dem Reflektometerverfahren eingerichtet ist, ein Verfahren zur Füllstandbestimmung nach dem Reflektometerverfahren, ein Programmelement und ein computerlesbares Medium.

### Hintergrund

Füllstandradargeräte bestimmen den Füllstand aus der Laufzeit elektromagnetischer Wellen, die vom Messgerät als Sendesignal ausgesendet und nach deren Reflexion am Füllgut wieder empfangen werden. Aus der Laufzeit der elektromagnetischen Wellen lässt sich der Abstand zwischen dem Messgerät und dem Füllgut, und aus diesem wiederum ein Befüllungsgrad eines mit dem Messgerät ausgestatteten Behälters ermitteln.

Bei den ausgesendeten elektromagnetischen Wellen, im Folgenden auch als elektromagnetisches Sendesignal bezeichnet, kann es sich um Hochfrequenzwellen oder Mikrowellen handeln. Sie können vom Messgerät in Richtung Füllgut frei abgestrahlt werden oder, alternativ, von einem Wellenleiter hin- und zurückgeleitet werden.

Zur Messung der Laufzeit der elektromagnetischen Wellen zwischen deren Aussendung und Empfang sind verschiedene Messverfahren bekannt. Grundsätzlich lassen sie sich unterscheiden in Verfahren, welche die Laufzeit sehr kurzer Sendepulse messen, meist als Puls-Radar bezeichnet, und Messprinzipien, welche auf der Modulation von kontinuierlich gesendeten Signalen beruhen. Diese als CW (Continuous Wave)-Radar bekannten Verfahren senden während der Dauer eines Messvorgangs, der im Folgenden auch als Messzyklus oder Füllstandmessphase bezeichnet wird, ständig, womit die Sendedauer im Gegensatz zum Pulsverfahren innerhalb eines Messzyklus typischerweise um Größenordnungen länger ist als die Laufzeit der Sendesignale.

Durch die Modulation der Sende- und Empfangswellen lässt sich dabei die Laufzeit indirekt bestimmen. Beim FMCW-Verfahren (FMCW: Frequency Modulated Continuous Wave) wird hierzu eine lineare Frequenzmodulation verwendet.

US 2015/0253176 A1 beschreibt ein Radarfüllstandmessgerät, bei dem sich die Bandbreite des Sendesignals vergrößern lässt.

EP 2 631 612 A2 beschreibt ein Verfahren zur Überwachung und ein Verfahren zum Betreiben eines nach dem Radar-Prinzip arbeitenden Füllstandmesssystems, bei dem das Messgerät ein Testsignal als Ausgangssignal erzeugt.

EP 0 875 772 A2 beschreibt ein Verfahren und eine Anordnung zur Entleerungsmessung mit elektromagnetischen Wellen nach dem Impul sl aufzeitverfahren.

### Zusammenfassung der Erfindung

Es eine Aufgabe der Erfindung, die Messgenauigkeit von Füllstandradargeräten zu erhöhen.

Diese Aufgabe wird durch die Merkmale der unabhängigen Patentansprüche gelöst.

Die vorliegende Erfindung ist in den beigefügten unabhängigen Ansprüchen 1, 9, 11 und 12 definiert.

Weiterbildungen der Erfindung ergeben sich aus den abhängigen Ansprüchen und der folgenden Beschreibung von Ausführungsformen.

Ein erster Aspekt der Erfindung betrifft ein Füllstandmessgerät in Form eines Füllstandradars, das zur Füllstandmessung nach dem Reflektometerverfahren eingerichtet ist, welches weiter unten näher beschrieben ist.

Das Füllstandmessgerät weist eine Signalquellenanordnung auf, die eingerichtet ist, ein elektromagnetisches Sendesignal während einer Füllstandmessphase zu erzeugen. Im Regelfall wird diese Füllstandmessphase gerade lang genug sein, um aus dem Sendesignal den Füllstand mit hinreichender Genauigkeit bestimmen zu können. Typische Messzeiten liegen deutlich unterhalb einer Sekunde.

Das Sendesignal verläuft hierbei gestuft frequenzmoduliert, wobei jede Stufe eine konstante Frequenz über eine Zeitdauer aufweist, die jeweils größer ist als die doppelte Laufzeit des Sendesignals von der Signalquellenanordnung zum Füllgut. Die einzelnen konstanten Frequenzen des Sendesignals (also die Stufen) sind innerhalb eines definierten Frequenzbandes verteilt, so dass die unterste Stufe im unteren Bereich des Frequenzbandes, beispielsweise an dessen unterem Rand, liegt und die oberste Stufe im oberen Bereich des Frequenzbandes, beispielsweise an dessen oberem Rand.

Es ist eine Steuerschaltung vorgesehen, die eingerichtet ist, die Anzahl der Stufen, die Frequenzabstände zwischen den einzelnen Stufen, die Zeitdauern der einzelnen Stufen, die Bandbreite des Frequenzbandes, die Frequenz der untersten Stufe und/oder die Frequenz der obersten Stufe zu ändern. Diese Änderung erfolgt typischerweise nach dem Ende einer Füllstandmessphase. Es kann aber auch vorgesehen sein, dass einige oder mehrere der oben beschriebenen Größen während einer Füllstandmessphase geändert werden, beispielsweise weil sich herausgestellt hat, dass in der Mitte des Frequenzbandes andere Parameter eingestellt werden sollen, um die Messgenauigkeit zu erhöhen oder um Energie zu sparen.

Erfindungsgemäß ist die Steuerschaltung eingerichtet, das elektromagnetische Sendesignal in zumindest zwei zeitlich voneinander getrennte Teilsignale zu zerlegen, zwischen deren Aussendung in Richtung Füllgut eine Signalverarbeitung der zuvor empfangenen Signale erfolgen kann. Insbesondere kann vorgesehen sein, dass in diesem Zeitraum eine Hochfrequenzeinheit der Signalquellenanordnung deaktiviert ist. Hierdurch wird Energie gespart und die Messung fortgesetzt, wenn wieder ausreichend Energie gesammelt ist.

Dies bietet sich insbesondere bei Verwendung eines 4 bis 20 mA Zweileitersystems an, bei welchem die zur Verfügung stehende Energie naturgemäß stark limitiert ist. Gemäß einer Ausführungsform der Erfindung ist das Füllstandradargerät zum Anschluss an eine 4 bis 20 mA Zweileiterschleife ausgeführt, über welche das Füllstandradargerät mit der für die Messung erforderlichen Energie versorgt wird und über welche das Gerät Messdaten versendet und von einer externen Stelle Parametrierungsdaten empfangen kann.

Gemäß einer weiteren Ausführungsform der Erfindung liegen die Frequenzen der Stufen des zweiten Teilsignals zwischen den Frequenzen der Stufen des ersten Teilsignals. Beispielsweise kann vorgesehen sein, dass die Stufen des ersten Teilsignals äquidistant verteilt sind und dass auch die Stufen des zweiten Teilsignals äquidistant verteilt sind, aber jeweils die Frequenz einer Stufe des zweiten Teilsignals zwischen den Frequenzen zweier benachbarter Stufen des ersten Teilsignals liegt.

Gemäß einer weiteren Ausführungsform der Erfindung weisen die Stufen im Mittelbereich des Sendesignals eine größere Zeitdauer auf als die Stufen in den Randbereichen des Sendesignals. Hierdurch kann das Signal-Rausch-Verhältnis im Mittelbereich erhöht werden.

Gemäß einer weiteren Ausführungsform der Erfindung ist die Steuerschaltung zur Durchführung der Änderung unter Verwendung benutzerseitig eingegebener und/oder vom Füllstandmessgerät erfasster Kenngrößen eingerichtet. So kann sich beispielsweise nach einer Füllstandmessung herausstellen, dass eine Verbesserung des Signal-Rausch-Verhältnisses erstrebenswert ist. Dementsprechend kann die Zeitdauer der einzelnen Stufen erhöht werden. Weiter kann sich herausstellen, dass eine Verkleinerung der Echobreite erforderlich ist, woraufhin die Bandbreite des Sendesignals erhöht werden kann. Reicht nun insgesamt die zur Verfügung stehende Energie nicht mehr aus, einen kompletten Messzyklus ohne Unterbrechung durchzuführen, kann das Sendesignal in mehrere Teilbereiche zerlegt werden, welche zeitlich voneinander getrennt durchlaufen werden. In den Pausen dazwischen kann Energie gesammelt werden.

Insbesondere kann das Füllstandmessgerät zum heterodynen Mischen des empfangenen reflektierten Sendesignals mit einem Signal einer weiteren Signalquellenanordnung zur Bildung eines reflexionsabhängigen Empfangssignals, aus welchem sich der Füllstand bestimmen lässt, ausgeführt sein.

Gemäß einer weiteren Ausführungsform der Erfindung ist das Füllstandmessgerät zum Erfassen genau eines Füllstandmesswertes während der Füllstandmessphase eingerichtet. Gemäß dieser Ausführungsform ist die Füllstandmessphase gerade so lang, dass der Füllstandmesswert mit hinreichender Genauigkeit erfasst werden kann.

Ein weiterer Aspekt der Erfindung betrifft ein Verfahren zur Füllstandbestimmung nach dem Reflektometerprinzip, bei dem während einer Füllstandmessphase ein gestuft frequenzmoduliert verlaufendes elektromagnetisches Sendesignal erzeugt wird. Jede Stufe weist eine konstante Frequenz über eine Zeitdauer auf, die größer ist als die doppelte Laufzeit des Sendesignals von der Signalquellenanordnung zum Füllgut. Die einzelnen konstanten Frequenzen des Sendesignals sind hierbei innerhalb eines definierten Frequenzbandes verteilt. Während oder nach der Aussendung des Sendesignals wird die (vorher festgelegte) Anzahl der Stufen, der Frequenzabstand zwischen den einzelnen Stufen, die Zeitdauer der einzelnen Stufen, die Breite des Frequenzbandes, die Frequenz der untersten Stufe und/oder die Frequenz der obersten Stufe verändert. Diese Änderung erfolgt auf Reaktion einer Benutzereingabe und/oder aufgrund von Erkenntnissen, die das Füllstandmessgerät während der Messung gesammelt hat.

Ein weiterer Aspekt der Erfindung betrifft ein Programmelement, das, wenn es auf einem Prozessor eines Füllstandmessgeräts ausgeführt wird, das Füllstandmessgerät veranlasst, die oben beschriebenen Schritte durchzuführen.

Ein letzter Aspekt der Erfindung betrifft ein computerlesbares Medium, auf dem das oben beschriebene Programmelement gespeichert ist.

Ein Grundgedanke der Erfindung kann darin gesehen werden, dass das Füllstandmessgerät in der Lage ist, die zur Messung verwendeten und von einem Synthesizer (Signalquellenanordnung) erzeugten Sendesignale hinsichtlich der Menge an erzeugten Signalfrequenzen und/oder der Menge an zeitlichen Längen der erzeugten Sendesignale von einem ersten Messzyklus zu einem zweiten Messzyklus derart zu verändern, dass ein auf den jeweiligen Anwendungsfall optimiertes Verhalten erreicht wird. Eine geschickte Festlegung der anzusteuernden Sendefrequenzen und deren jeweiligen zeitlichen Längen kann einen im Hinblick auf die jeweilige Anwendungssituation des Messgeräts optimierten Betriebsablauf zur Folge haben.

Im Folgenden werden mit Verweis auf die Figuren Ausführungsformen der Erfindung beschrieben. Werden in den Figuren die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt ein Blockschaltbild eines Füllstandradargeräts.
Fig. 2 zeigt ein von diesem Messgerät durchgeführtes Messverfahren.
Fig. 3 zeigt ein in der Steuerschaltung ablaufendes Messverfahren.
Fig. 4 zeigt einen ersten Betriebsablauf eines alternativen Füllstandradargeräts.
Fig. 5 zeigt einen weiteren Betriebsablauf eines alternativen Füllstandradargeräts.
Fig. 6 zeigt einen weiteren Betriebsablauf eines alternativen Füllstandradargeräts.
Fig. 7 zeigt einen weiteren Betriebsablauf eines alternativen Füllstandradargeräts.
Fig. 8 zeigt einen weiteren Betriebsablauf eines alternativen Füllstandradargeräts.
Fig. 9 zeigt einen weiteren Betriebsablauf eines alternativen Füllstandradargeräts.

### Detaillierte Beschreibung von Ausführungsformen

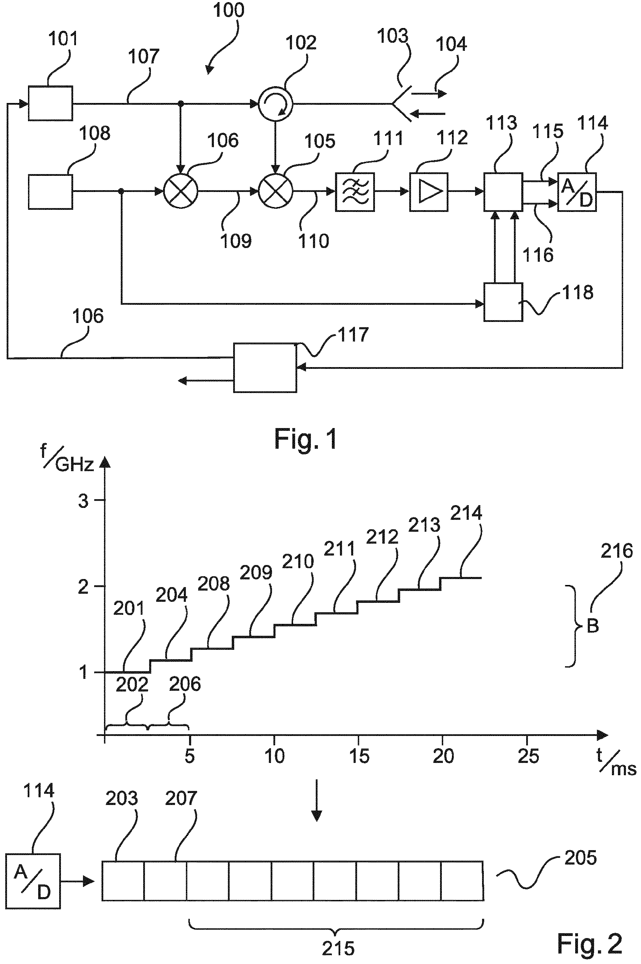

Fig. 1 zeigt ein Blockschaltbild eines zu dem oben beschrieben bekannten FMCW-Verfahren alternativen Messverfahrens. Es unterscheidet sich zu den bislang verwendeten Vorrichtungen unter anderem durch eine heterodyne Schaltungsausführung, die eine Empfangsmischung des empfangenen Signals mit einem Lokaloszillatorsignal unterschiedlicher Frequenz vorsieht, so dass am Mischerausgang eine Zwischenfrequenz entsteht.

Ähnlich wie beim FMCW Verfahren wird vom Synthesizer 101 ein Sendesignal erzeugt, welches über den Zirkulator 102 oder Richtkoppler 102 zur Antenne 103 geleitet und von dieser abgestrahlt wird. Die Antenne 103 wandelt dabei ein über eine Leitung zugeführtes Hochfrequenzsignal in eine elektromagnetische Welle 104, welche entweder frei abgestrahlt oder alternativ über einen Wellenleiter, beispielsweise einen Hohlleiter oder einen Eindraht- oder Mehrdrahtleiter, in Richtung Reflektor geführt wird. Die am Reflektor reflektierte Welle gelangt wenigstens teilweise wieder zurück zur Antenne 103 und wird zurück in ein leitungsgeführtes Empfangssignal gewandelt. Dieses gelangt über den Zirkulator 102 oder Richtkoppler 102 nun zum Empfangsmischer 105. Der Zirkulator oder Richtkoppler 102 ist ein im Bereich der Radar-Füllstandmessung bekanntes Bauteil, welches bei monostatischem Betrieb, also bei Verwendung der gleichen Antenne zum Senden und Empfangen, vorteilhaft einsetzbar ist. Er besitzt mindestens 3 Ports und leitet richtungsselektiv Signale von einem Port vorwiegend zu einem zweiten Port, während der dritte Port hierbei entkoppelt ist. Bei einem ebenfalls möglichen, hier nicht näher gezeigten bistatischen Betrieb werden zum Senden und Empfangen zwei separate Antennen verwendet. Dabei entfällt der Zirkulator oder Richtkoppler 102 und das Signal gelangt einerseits vom Synthesizer 101 zur Sendeantenne und andererseits von der Empfangsantenne zum Empfangsmischer 105.

Der Synthesizer 101 dient zur Erzeugung von verschiedenen Sinusschwingungen verschiedener Frequenz in einem zuvor festgelegten Frequenzband, wobei die Frequenz für eine gewisse Zeitdauer auf einem festen Wert verharrt und danach auf einen neuen festen Frequenzwert springt. Dies kann beispielsweise in Form einer gestuft linearen Frequenzmodulation stattfinden. Dazu enthält er einen abstimmbaren Oszillator, beispielsweise einen VCO (voltage controlled oscillator). Außerdem enthält er in vorteilhafter Weise eine Regelschleife und einen Referenzoszillator. Die Regelschleife, beispielsweise eine Phasenregelschleife PLL (phase-locked loop), regelt die Frequenz des abstimmbaren Oszillators so, dass sie in einem bestimmten, einstellbaren Verhältnis zur Frequenz des Referenzoszillators steht.

Die Einstellung des Frequenzverhältnisses geschieht vorteilhaft digital, beispielsweise gesteuert durch eine Controllerschaltung 117, die im vorliegenden Kontext auch als Steuerschaltung bezeichnet wird, über das Signal 106, und bedeutet meist die Umschaltung eines oder mehrerer Teilerbausteine, welche die Frequenz von Referenzoszillator und / oder des abstimmbaren Oszillators herunterteilen. Dabei sind neben einfachen ganzzahligen Teilern auch nicht ganzzahlige Teiler, sogenannte fractional N-Teiler, möglich. Durch die Verwendung solcher Teiler ist es möglich, die Ausgangsfrequenz des Synthesizers 101 in sehr feinen Schritten über einen relativ großen Frequenzbereich zu verstellen.

Ein Teil des Ausgangssignals des Synthesizers 101 wird abgezweigt, beispielsweise über einen nicht näher gezeigten Power-Splitter oder einen Koppler, um das Lokaloszillatorsignal 109 für den Empfangsmischer 105 zu bilden. Dazu wird über den Mischer 106 das abgezweigte Synthesizersignal 107 mit einem Ausgangssignal eines Festfrequenzoszillators 108 gemischt, wodurch verschiedene neue Frequenzanteile wie die Summenfrequenz und die Differenzfrequenz aus den beiden Eingangsfrequenzen entstehen. Beide können nach entsprechender, hier nicht dargestellter Bandfilterung wahlweise als oben erwähntes Lokaloszillatorsignal des Empfangsmischers 105 dienen.

Im Empfangsmischer 105 entsteht aus Lokaloszillatorsignal und Empfangssignal unter anderem die Differenzfrequenz der beiden Signale, die somit genau der Ausgangsfrequenz des Festfrequenzoszillators 108 entspricht. Dieses als Zwischenfrequenzsignal 110 bezeichnete Ausgangssignal des Empfangsmischers 105 besitzt neben der eben erwähnten festen Frequenz eine Phasenlage, die zusammen mit der Amplitude des Zwischenfrequenzsignals eine komplexe Kenngröße des Reflexionskoeffizienten aller an der Reflexion der Welle beteiligter Reflektoren definiert. Oder mit anderen Worten ausgedrückt ist die Phasenlage des Zwischenfrequenzsignals von der gegenseitigen Phasenlage von Lokaloszillatorsignal und Empfangssignal abhängig. Die Phasenlage des Empfangssignals seinerseits hängt ab von der zurückgelegten Strecke der gesendeten bzw. empfangenen Welle und damit von der Reflektorentfernung, während die Phasenlage des Lokaloszillatorsignals vom Synthesizer-Ausgangssignal und damit dem gesendeten Signal abhängt. Somit ist die Phasenlage des Zwischenfrequenzsignals letztlich nur abhängig von der Phasenverschiebung zwischen Sendesignal und Empfangssignal und damit von der Reflektorentfernung. Im Bandfilter 111 wird dieses Zwischenfrequenzsignal bandgefiltert und im Zwischenfrequenzverstärker 112 verstärkt, um den Signal-Rausch-Abstand zu erhöhen. Um den komplexen Reflexionskoeffizienten aus dem analog vorliegenden Zwischenfrequenzsignal zu bestimmen, kann durch Verwendung einer Phasenschieberschaltung 118 und eines Quadraturdemodulators 113 das Zwischenfrequenzsignal in seine komplexen Bestandteile, also den Real- und den Imaginärteil, zerlegt und danach beide Anteile getrennt analog-digital gewandelt werden. Vorteilhaft an der Verwendung des Quadraturdemodulators ist, dass Real- und Imaginärteil des Zwischenfrequenzsignals als Basisbandsignale 115, 116 vorliegen, d.h. keine hohen Frequenzanteile mehr enthalten und damit sehr einfach zu digitalisieren sind.

Wie bereits angedeutet erfolgt nach der Analog-Digitalwandlung durch den Analog-Digital-Wandler 114 die Weiterverarbeitung der Messwerte innerhalb der Controllerschaltung 117. Der Schaltungsteil 117 enthält neben Programmcode zur Auswertung der digitalisierten Messsignale insbesondere auch Programmcode zur Ablaufsteuerung eines Messzyklus, d.h. zur Initiierung der Aussendung der Wellen und der Steuerung der Frequenzen sowie der allgemeinen Steuerung der Sende-Empfangsschaltung 100.

Die in Fig. 1 gezeigte Schaltungsanordnung erlaubt wie beschrieben die Bestimmung eines komplexen Reflexionskoeffizienten. Dieser komplexe Reflexionskoeffizient setzt sich zusammen aus allen Reflexionsanteilen, die im empfangenen Signal enthalten sind. Sind mehrere Reflektoren daran beteiligt, so sind die einzelnen Signalanteile nicht mehr separierbar und eine Bestimmung der Distanz der einzelnen Reflektoren nicht möglich. Wiederholt man diese Messung auf weiteren eingestellten Ausgangsfrequenzen innerhalb eines bestimmten Frequenzbandes, lässt sich aber eine digitale Wertetabelle bestehend aus den eingestellten Frequenzwerten und den zugehörigen komplexen Reflexionskoeffizienten erstellen.

Figur 2 zeigt den Frequenzverlauf eines beispielhaften Sendesignals der Schaltungsanordnung nach Fig. 1. Der dargestellte Ablauf einer Füllstandreflektometrie beginnt mit dem Einstellen einer ersten Frequenz 201 von beispielsweise 1 GHz am Ausgang des Synthesizers 101. Das Signal wird abgesendet, wieder empfangen und nach dem oben beschriebenen Verfahren verarbeitet zur Bestimmung des komplexen Reflexionskoeffizienten. Im Gegensatz zu bekannten Verfahren nach dem FMCW-Prinzip verharrt das System für eine Zeit, welche länger ist als die doppelte Laufzeit des Mikrowellensignals 104 zum Reflektor und zurück auf der eingestellten Frequenz. Im vorliegenden Fall wird die vorgegebene Frequenz für einen Zeitraum 202 von 2.5 ms eingestellt. Während dieses Zeitraums ermittelt der A/D - Wandler 114 einen ersten komplexen Reflexionskoeffizienten 203, welcher als Inphasen- und Quadraturkomponente oder auch nach Betrag und Phasenlage im Speicher 205 abgelegt wird. Anschließend stellt die Controllereinheit 117 über die Steuerleitung 106 am Synthesizer 101 eine zweite Frequenz 204 ein, welche im vorliegenden Beispiel gerade um 250 MHz höher liegt als die erste Frequenz 201. Nach oben beschriebenem Schema wird vom A/D-Wandler 114 während der Zeit 206 ein komplexer Reflexionskoeffizientenwert 207 bestimmt und im Speicher abgelegt. Das iterative Verfahren wird in gleicher Weise für die Stützstellen 208 - 214 fortgesetzt, wodurch sich die komplexen Koeffizienten 215 bestimmen lassen. Charakteristische Kennwerte des dargestellten Messablaufs gemäß Figur 2 sind die Bandbreite B 216, welche sich als Differenz zwischen der höchsten eingestellten Frequenz 214 und der niedrigsten Frequenz 201 ergibt, sowie die Anzahl der eingestellten Frequenzen 201, 204, 208-214.

Im gezeigten Beispiel werden in vorteilhafter Weise die Frequenzabstände aller benachbarten Frequenzwerte gleich gewählt, so dass die Frequenzwerte das Frequenzband in äquidistante Abschnitte unterteilen.

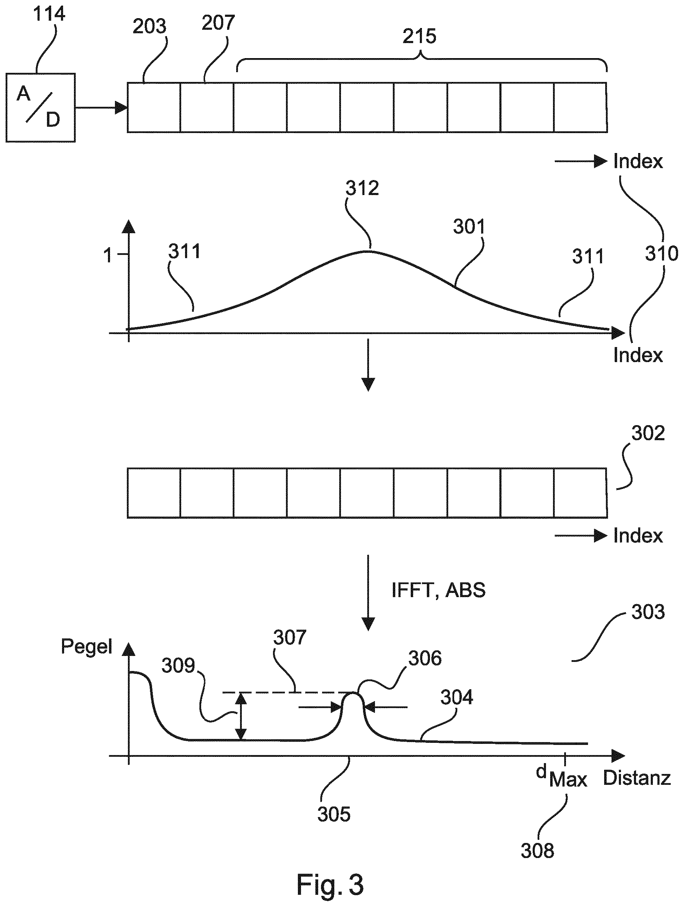

Die sich aus der Messung ergebenden komplexen Reflexionskoeffizienten 203, 207, 215 zu den vermessenen Frequenzstützpunkten 201, 204, 208-214 werden im Controller 117 des Messgerätes weiter verarbeitet. Figur 3 zeigt das in der Controllereinheit 117 ablaufende Verfahren. Die Koeffizienten 203, 207, 215 werden zunächst mit einer Fensterfunktion 301 durch Multiplikation gewichtet. An dieser Stelle können alle zur spektralen Analyse üblicherweise verwendeten Fensterunktionen angewendet werden, also insbesondere Tschebyscheff-Fenster oder auch Hamming-Fenster.

Das angewendete Fenster bewirkt eine Unterdrückung von Nebenkeulen bei der anschließenden Transformation. Die nach der Fensterung sich ergebenden Koeffizienten 302 werden nach bekannten Verfahren der inversen Spektralanalyse, also insbesondere durch Anwendung einer IFFT (inverse fast fourier transformation) 303 transformiert, und durch Ermittlung des Absolutbetrages in eine Echokurvendarstellung, also eine digitale Darstellung im Zeitbereich 304 überführt.

Dieses digitale Zeitsignal wiederum ist charakteristisch für die Summe der Reflexionen des ausgesandten und wieder empfangenen Messsignals. Es liegt vor in Form einer Wertetabelle von Zeitwerten und zugehörigen Reflexionsanteilen und kann hinsichtlich des Auftretens lokaler Maxima ausgewertet werden. Diese lokalen Maxima kennzeichnen die einzelnen Reflexionen der verschiedenen Reflektoren, die nach der zugeordneten Zeit empfangen wurden. In dieser Form gleicht nun diese Zeit-Reflexionsamplitude-Wertetabelle den aus den bekannten Füllstandradarverfahren geläufigen digitalisierten Reflexionsprofilen. Weitere Auswerteschritte zur Bestimmung des gesuchten Echos der Füllgutoberfläche und die Bestimmung des exakten Reflexionszeitpunkts dieses Echos können deshalb aus den bekannten Methoden der Puls-Radar- oder FMCW-Radarsysteme übernommen werden.

Die Echokurve 304 zeigt insbesondere an der Stelle 305 eine relevante Pegelerhöhung 306, welche durch die Reflexion der abgesendeten Signale am Füllgut entsteht. Wichtige Parameter der Echokurvendarstellung sind zum einen die Breite 307 des Echos 306, welche üblicherweise auf einem Niveau der halben Maximalamplitude ermittelt wird, sowie der maximal erfasste Messbereich d_{Max} 308. Ein wichtiges Kriterium zur Beurteilung der Zuverlässigkeit der Messung ist daneben der Signal-Rausch-Abstand 309.

Einfachstes Prinzip beim Aufbau von Messgeräten nach dem Reflektometerprinzip ist, dass zur Ermittlung der Echokurve eine vorab definiert Menge an Frequenzen 201, 204, 208-214 nach einem fest eingestellten Muster abgestrahlt wird, welche zu einer vorab definierten Anzahl an Messwerten 203, 207, 215 führen.

Vor diesem Hintergrund wäre es vorteilhaft, ein Füllstandmessgerät so einzurichten, dass es in der Lage ist, das einfache Ansteuerprinzip zu erweitern, und somit situativ zu besseren Messergebnissen und zuverlässigeren Messungen zu gelangen.

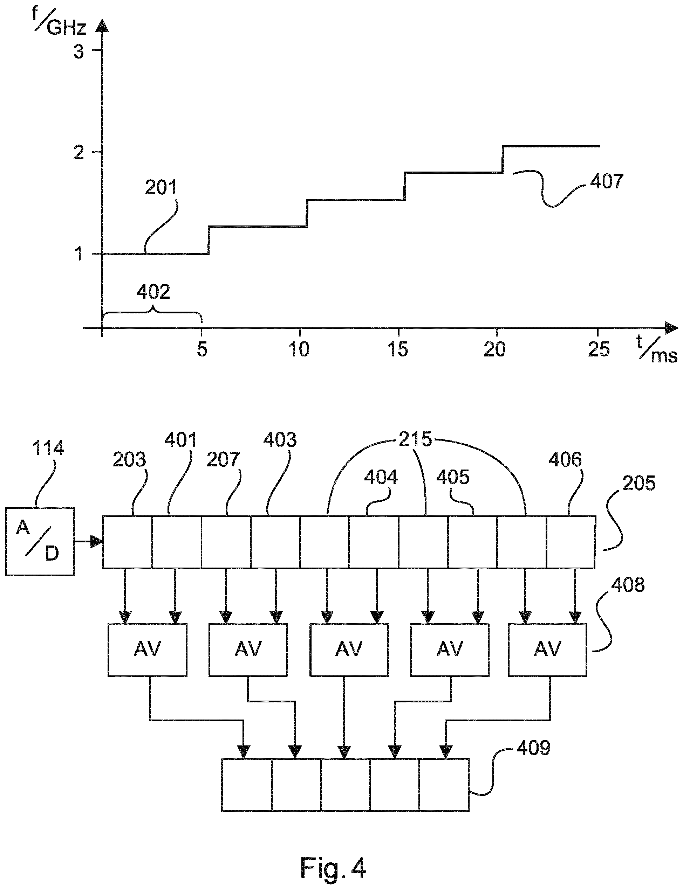

Figur 4 zeigt einen ersten alternativen Betriebsablauf eines entsprechenden Messgeräts. Das vorgeschlagene Verfahren kann insbesondere bei schlecht reflektierenden Medien angewendet werden, da es insbesondere zu einer Erhöhung des Signal-Rausch-Verhältnisses 309 in einer Messung beitragen kann. Das Verfahren macht sich die Idee zu Nutze, eine einmal eingestellte Sendefrequenz 201 zeitlich länger anstehen zu lassen, wodurch der A/D-Wandler 114 in die Lage versetzt wird, zusätzlich zum ersten Messkoeffizienten 203 einen weiteren Koeffizienten 401 zu ermitteln und im Speicher abzulegen. Die modifizierte Controllereinheit 117 sorgt durch geeignete Ansteuersignale 106 dafür, dass die Zeitdauer 402 des Anliegens der Sendefrequenz 201 entsprechend verlängert wird. Nach gleichem Muster werden auch für die Koeffizienten 207, 215 zugehörige Zusatzmesswerte 403, 404, 405, 406 ermittelt und im Speicher 205 abgelegt. Es kann somit vorgesehen sein, dass mehr Messwerte im Speicher abgelegt werden, als dies im Ausführungsbeispiel der Figur 2 vorgesehen war. Es kann aber auch vorgesehen sein, dass die Frequenzdifferenz zwischen aufeinander folgenden Sendefrequenzen 407 derart vergrößert wird, dass die gleiche Anzahl an Koeffizienten bestimmt wird.

In einem zeitlich daran anschließenden Auswerteschritt 408 wird zunächst aus den zu einer Frequenzstufe 201, 407 gehörenden Reflexionskoeffizienten 203, 401 der Durchschnittswert der Real- und Imaginärteile gebildet und im Speicher 409 entsprechend abgelegt. Die weitere Auswertung des Signals 409 erfolgt nach bekannten Verfahrensschritten, also insbesondere durch Fensterung, IFFT, Absolutwertbildung, Echosuche und Bestimmung der Distanz zum Echo.

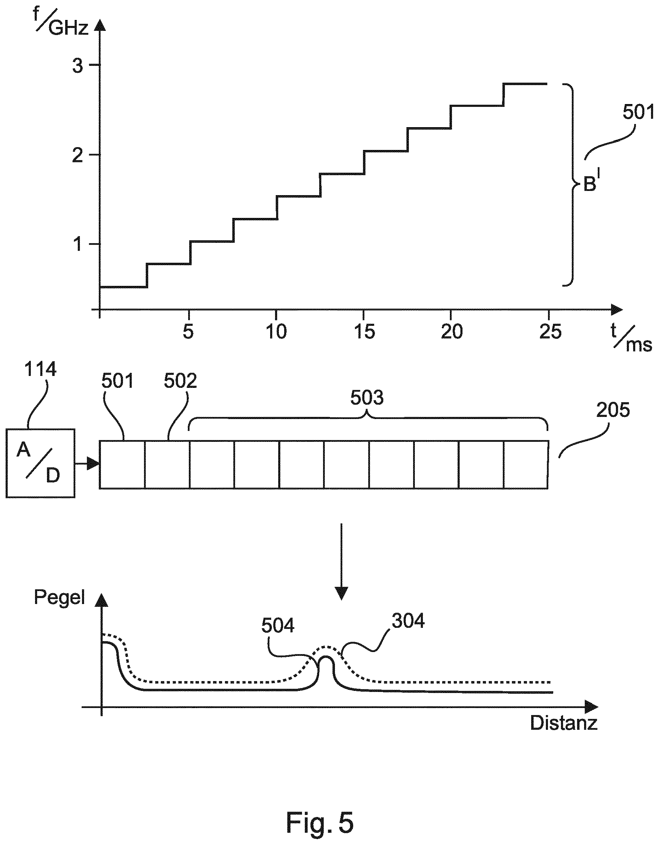

Figur 5 zeigt einen weiteren alternativen Betriebsablauf, welcher dazu geeignet ist, die Breite 307 eines Echos 306 zu verkleinern. Eine kleinere Echobreite bietet immer dann Vorteile, wenn mehrere Echos einer Echokurve 304 sehr nahe beieinander liegen. Dies kann beispielsweise beim Vorhandensein von Störechos in einem Behälter der Fall sein. Die modifiziert Controllereinheit 117 steuert den Synthesizer 101 derart an, dass dieser im zeitlichen Ablauf eine im Vergleich zur Figur 2 vergrößerte Bandbreite B' 501 realisiert. Die auf diese Weise ermittelten Koeffizenten 501, 502, 503 werden nach bekannten Verfahren in eine Echokurvendarstellung umgerechnet. Die sich so ergebende Echokurve 504 weist ein Echo auf, dessen Breite im Vergleich zu der nach Figur 2 ermittelten Echokurve 304 deutlich reduziert ist, wodurch sich die Trennschärfe bei eng beieinanderliegenden Echos verbessert.

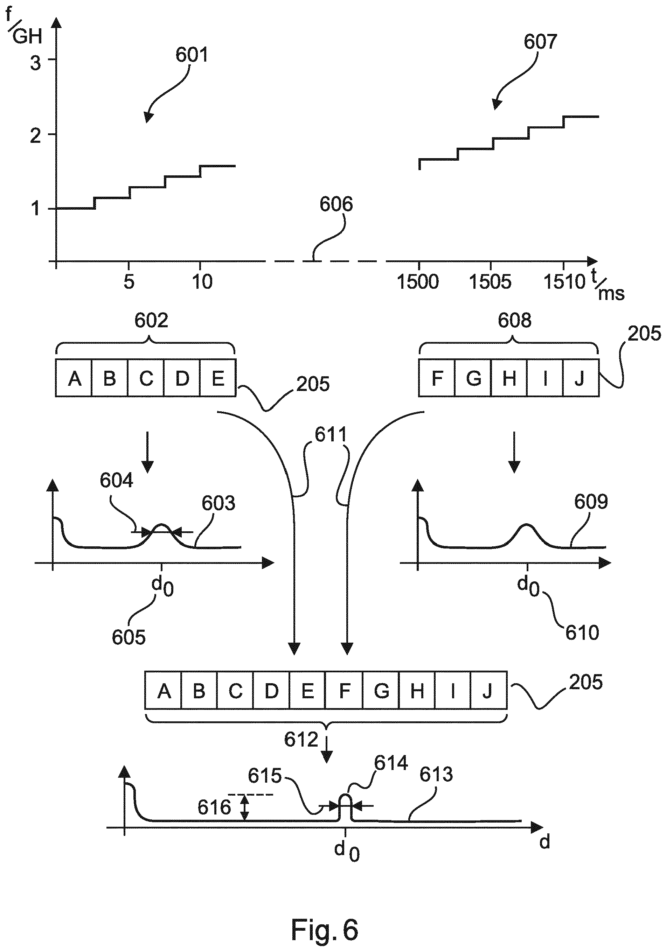

Figur 6 zeigt eine weitere Ausgestaltung eines alternativen Messablaufs. Da insbesondere im Bereich der Prozessautomatisierung und der dort dominierenden Versorgung von Feldgeräten über eine 4..20 mA Schnittstelle die zur Messung zur Verfügung stehende Leistung begrenzt sein kann, bereitet es mitunter Probleme, über einen längeren Zeitraum hinweg genügend Leistung zur Erzeugung von Hochfrequenzsignalen bereitstellen zu können. Es kann vorgesehen sein, die Hochfrequenzeinheiten bei zu wenig Energie zu deaktivieren, und ein Sammeln von Energie in einem Zwischenspeicher einzuleiten. Sobald dieser hinreichend befüllt ist, werden die Hochfrequenzeinheiten wieder aktiviert, und eine neue Messung wird initiiert. Nachteilig an dieser Vorgehensweise ist, dass zum einen ein mitunter sehr großer Energiezwischenspeicher benötigt wird, und dass zum anderen die Messwiederholrate stark herabgesetzt wird. Grundgedanke der Ansteuerung ist die Zerlegung einer länger andauernden Messung in Teilmessungen. Hierzu wird zunächst eine erste Teilmenge 601 an Sendefrequenzen angesteuert. Die ermittelten Messwerte A, B, C, D, E 602 werden in einem ersten Teilbereich des Speichers im Sensor 602 abgelegt. Nach Deaktivierung der Hochfrequenzeinheiten kann hieraus eine erste Echokurve 603 mit einer ersten Echobreite 604 ermittelt werden, und es kann zudem ein erster Messwert 605 bereitgestellt werden. Nach einer entsprechenden Messpause 606 wird die Hochfrequenzeinheit wieder aktiviert, und eine zweite Teilmenge 607 an Sendefrequenzen abgestrahlt, welche ein Ermitteln einer zweiten Menge an Reflexionskoeffizienten F, G, H, I, J 608 ermöglichen. Die neuerlich ermittelten Koeffizienten lassen sich wiederum in eine Echokurve 609 und einen Messwert 610 umrechnen. In einem weiteren Schritt 611 werden die Reflexionskoeffizienten 602 einer ersten Messung und die Koeffizienten 608 einer zweiten Messung im Speicher 205 zusammengeführt, und einer gemeinsamen Auswertung unterzogen. Die aus der Gesamtheit an Koeffizienten A, B, C, D, E, F, G, H, I, J 612 ermittelte Echokurve 613 kann wiederum auf Echos hin untersucht werden, wobei die Echos 614 der Echokurve 613 sowohl in Bezug auf ihre Breite 615 als auch in Bezug auf den Signal-Rausch-Abstand 616 gegenüber den Teilergebnissen der Echokurven 603, 609 deutliche Verbesserungen zeigen. Durch die frühzeitige Bereitstellung von Messwerten ermöglicht das Verfahren dennoch eine sehr hohe Messwiederholrate.

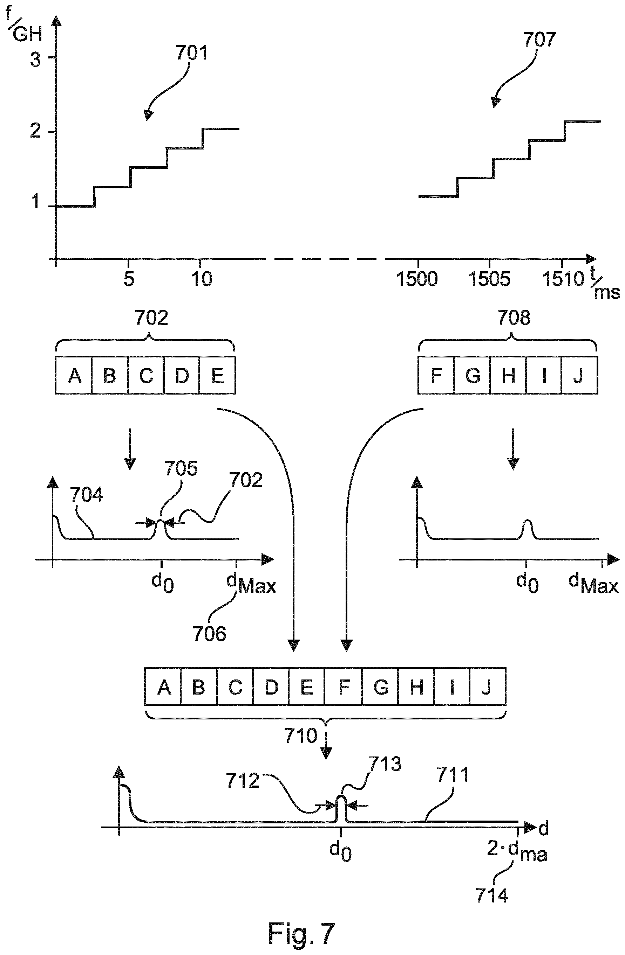

Figur 7 zeigt eine weitere Abwandlung des Verfahrens der Teilmessungen nach Figur 6. Im Gegensatz zu den Teilmengen an Sendesignalen 601 weisen die vom Synthesizer erzeugten Messfrequenzen 701 größere Abstände zueinander auf. Nach entsprechender Umrechnung der Reflexionskoeffizienten A, B, C, D, E 703 in eine Echokurve 704 kann direkt ein Echo 705 ermittelt werden, dessen Breite 702 derjenigen des Echos 614 der Echokurve 613 entspricht. Man erhält somit auf Basis einer ersten Teilmessung bereits eine sehr hohe Trennschärfe bei sehr eng beieinanderliegenden Echos. Erkauft wird dieser Vorteil dadurch, dass die maximal ermittelbare Entfernung 706 innerhalb der Echokurve 704 im Vergleich zu der Maximalentfernung der Echokurve 603 gerade halbiert ist. Nach dem Durchführen einer zweiten Teilmessung 707, deren Sendefrequenzwerte gerade zwischen denen der ersten Messung liegen, und Ermitteln einer zweiten Menge an Koeffizienten F, G, H, I, J 708 lässt sich wiederum ein Zusammenführen 709 von Koeffizienten mehrerer Messungen A, F, B, G, C, H, D, I, E, J 710 realisieren, welche in eine Echokurve 711 überführt werden können. Es sei an dieser Stelle darauf hingewiesen, dass die Koeffizienten vor der spektralen Analyse entsprechend sortiert werden müssen. Die Echos 713 der so entstandenen Echokurve sind in Bezug auf ihre Breite 712 identisch mit den Echos der Echokurven der beiden Teilmessungen. Durch das Zusammenführen der beiden Teilmessungen verdoppelt sich aber der maximale Darstellungsbereich 714 der Echokurve 711.

Das Überführen der Koeffizienten 203, 207, 215 in eine Echokurvendarstellung 304 nach bekannten Verfahren umfasst wie bereits weiter oben erwähnt die Gewichtung mit einer Fensterfunktion 301. Im Hinblick auf die Frage der notwendigen Genauigkeit bei der Bestimmung der Reflexionskoeffizienten mag es eine Erkenntnis der vorliegenden Erfindung sein, dass der Einfluss einer Ungenauigkeit in einem gemessenen Koeffizienten 203, 207, 215 von dessen Lage, also insbesondere von dessen Index 310 in Relation zur Fensterfunktion 301 abhängt. Messungenauigkeiten in den Randbereichen 311 schlagen sich im Endergebnis weniger stark nieder als Messungenauigkeiten im Zentralbereich 312 der Fensterfunktion.

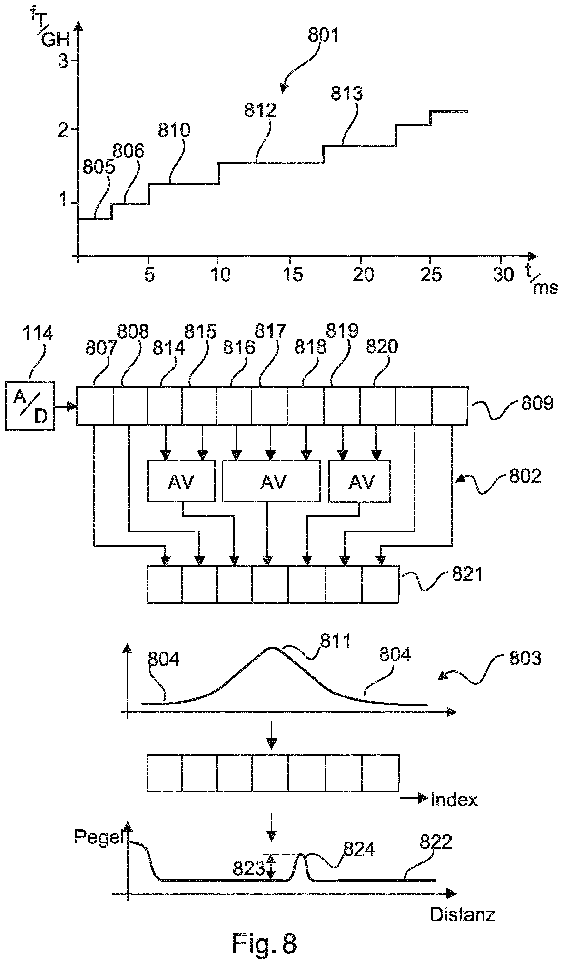

Figur 8 schlägt eine Ansteuerfunktion 801 und ein Auswertekonzept 802 vor, die sich diesen Sachverhalt zu Nutze machen. Zunächst werden Frequenzen 805, 806 im Bereich der Fensterränder 804 abgestrahlt. Da die Genauigkeitsanforderungen hier nicht allzu hoch sind, genügt es, jeweils einen Messwert 807, 808 zu ermitteln und im Speicher 809 abzulegen. Nähert sich das Verfahren der Fenstermitte 811, so wird der Synthesizer von der Controllerschaltung derart angesteuert, dass dieser die entsprechenden Sendefrequenzwerte 810, 812, 813 zeitlich länger anstehen lässt. Dies ermöglicht der Controllerschaltung 117 in Verbindung mit dem A/D-Wandler 114, eine Vielzahl an Messwerten 814, 815, 816-820 für die Reflexionskoeffizienten zu ermitteln, und im Speicher abzulegen. In einem nachgelagerten Signalverarbeitungsschritt erfolgt auf Basis dieser Einzelmesswerte für die Reflexionskoeffizienten zunächst eine Mittelung derjenigen Werte, welche bei der jeweils gleichen Sendefrequenz erfasst worden waren. Hierdurch lässt sich die Genauigkeit der Koeffizientenbestimmung 821 im Zentralbereich 811 der Fensterfunktion 803 deutlich steigern. Die genauigkeitsoptimierten Koeffizienten 821 werden im weiteren Verlauf nach bekannten Verfahren in eine verbesserte Echokurvendarstellung 822 überführen, deren Echos 824 über einen gesteigerten Signal-Rausch-Abstand 823 verfügen. Gleichzeitig kann mit dem beschriebenen Ablauf verhindert werden, bei unwichtigen Randkoeffizienten viel Energie und Messzeit zu verlieren, was dazu beiträgt, die Messwiederholrate insgesamt zu verbessern.

Die zuvor aufgezeigten Ansätze zur intelligenten Ansteuerung der Synthesizereinheit 101 lassen sich in einer weiteren Ausgestaltung auch kombinieren.

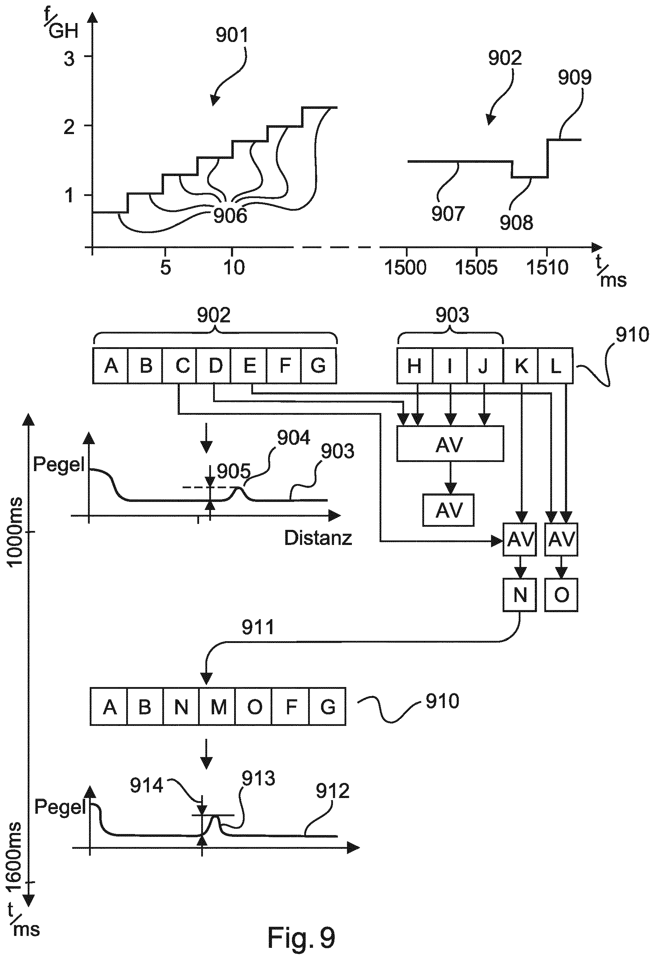

Figur 9 zeigt ein Beispiel einer Ansteuerfunktion mit weitgehend willkürlicher Frequenzvorwahl. In einem ersten Messdurchgang 901 steuert die modifizierte Controllereinheit den Synthesizer derart an, dass dieser einen konventionellen Messablauf realisiert. Die ermittelten Koeffizientenwerte A, B, C, D, E, F, G 902 können nach bekannten Verfahren in eine erste Echokurve 903 transformiert werden. Die erste Echokurve möge ein erstes Echo 904 mit einem ersten Signal-Rausch-Verhältnis 905 aufweisen. Um bei schlecht reflektierenden Medien den Signal-Rausch-Abstand 905 zu verbessern, könnten weitere Messungen nach dem Schema 901 durchgeführt werden. Werden innerhalb der Signalverarbeitung die Koeffizienten 902 mehrerer Messungen gemittelt, erhöht sich der Signal-Rausch-Abstand der Echos. Nachteilig ist hierbei aber, dass die Messzeit stark erhöht wird, was insbesondere bei sehr schnellen Füllstandänderungen zu Problemen führt. Der Messablauf 902 schafft hier eine Verbesserung. Ähnlich wie in der Darstellung 801 liegt auch hier die Erkenntnis zu Grunde, dass die zentral gelegenen Koeffizientenwerte C,D,E mit erhöhter Genauigkeit bestimmt werden sollten. Da es ein besonderer Vorteil eines Füllstandmessverfahrens nach dem Reflektometerprinzip ist, dass die einzelnen Frequenzwerte 906 völlig frei und unabhängig voneinander eingestellt werden können, werden im zweiten Messdurchlauf 902 nur noch diejenigen Frequenzwerte 907, 908, 909 angesteuert, auf Basis welcher Reflexionskoeffizienten mit erhöhter Genauigkeit benötigt werden. Es mag ein weiterer Vorteil der Erfindung sein, dass auch die Dauer des Anstehens einer Senderfrequenz wahlfrei eingestellt werden kann. Auf diese Weise mag es möglich sein, den Wert der Sendefrequenz 907 zeitlich länger anstehen zu lassen, als dies bei anderen Sendefrequenzen 908, 909 der Fall ist. Durch dieses längere Anstehen ergibt sich die Möglichkeit, mehrere Messwerte für die entsprechenden Reflexionskoeffizienten H, I, J 909 für die entsprechende Stufe 907 durch den A/D - Wandler 114 zu erfassen und im Speicher 910 abzulegen. Erfindungsgemäß werden im Rahmen der Signalverarbeitung diejenigen Messwerte der Reflexionskoeffizenten, welche bei der gleichen Sendefrequenz 906, 907, 908, 909 erfasst worden waren, gemittelt und im Speicher neu angeordnet. So ergibt sich beispielsweise für die zweite Auswertung 911 der zentral gelegene Koeffizientenwert M als Mittelwert der zugehörigen Messwerte D, H, I, J. Die Koeffizientenwerte N und O ergeben sich ebenfalls durch Mittelung, wohingegen die Koeffizienten A, B, F, G aus der ersten Messung unverändert übernommen werden. Nach der Umrechnung der sich auf diese Weise ergebenden Koeffizientenanordnung 910 in eine Echokurve 912 wird diese wiederum auf Echos hin untersucht. Es zeigt sich, dass das Echo 913 ein im Vergleich zum Echo 904 deutlich verbessertes Signal-Rausch-Verhältnis 914 aufweist, was insbesondere bei schlecht reflektierenden Medien zu einer deutlichen Verbesserung der Zuverlässigkeit des Messgerätes beiträgt. Gleichzeitig kann durch die erfindungsgemäße Abfolge von Messungen eine Erhöhung der Messwiederholrate erreicht werden, was ebenfalls zur Verbesserung der Zuverlässigkeit der Messung speziell in Behältern mit sehr schnellen Füllgutänderungen beitragen kann.

Die zuvor aufgezeigten Ausführungsformen zeigen, dass die Erfindung dazu verwendet werden kann, ein Messgerät, einen Messablauf und eine zugehörige Auswertestrategie zu definieren, welche sich dynamisch an verändernde Umgebungsbedingungen und/oder Benutzervorgaben anpassen kann. Im Vergleich zu bekannten FMCW-Verfahren, welche kein willkürliches Einstellen einer Abfolge von Sendefrequenzen vorsehen, besitzt das Füllstandmessgerät nach dem vorgestellten Reflektometerverfahren in Verbindung mit den offengelegten Prinzipien den großen Vorteil, sehr flexibel auf unterschiedlichste Anwendungen und Benutzervorgaben reagieren zu können. Es kann insbesondere auch vorgesehen sein, dass das Messgerät die beschriebenen Betriebsmodi und weitere Modi in Abhängigkeit von zuvor registrierten Ereignissen vollautomatisch und selbständig einstellt und/oder verändert.

Zu den Blockschaltbildern und Prinzipzeichnungen ist allgemein anzumerken, dass sie auf die wesentlichen Komponenten reduziert sind und für die praktische Umsetzung notwendige Komponenten teilweise weggelassen oder vereinfacht dargestellt wurden, da sie dem Fachmann bekannt sind. Dies betrifft beispielsweise Filtermaßnahmen am Ausgang der Mischer, um nur die erwünschten Mischfrequenzen durchzulassen und unerwünschte Mischprodukte zu unterdrücken. Außerdem ist dem Fachmann geläufig, Signale bei Bedarf an verschiedenen Stellen der Signalkette zu verstärken, um den Signal-Rausch-Abstand zu erhöhen. Dies könnten beispielsweise Verstärker im Sendezweig oder im Empfangszweig vor dem Empfangsmischer sein. Außerdem wurde hier nur der für die unmittelbare Messtechnik wichtige Teil der Sensorschaltung dargestellt. Ein nach diesem Prinzip aufgebauter Füllstand-Radarsensor kann selbstverständlich weitere dem Fachmann bekannte Schaltungsteile enthalten.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele im Schutzumfang der beigefügten Ansprüche 1-12 verwendet werden können. Bezugszeichen in den Ansprüchen sind nicht als Einschränkungen anzusehen.

## Patentansprüche

1. Füllstandmessgerät, das zur Füllstandmessung nach dem Reflektometerverfahren eingerichtet ist, aufweisend:
eine Signalquellenanordnung (101), eingerichtet zum Erzeugen eines elektromagnetischen Sendesignals während einer Füllstandmessphase;
wobei das Sendesignal gestuft frequenzmoduliert verläuft, wobei jede Stufe eine konstante Frequenz über eine Zeitdauer aufweist, die größer ist als die doppelte Laufzeit des Sendesignals von der Signalquellenanordnung zum Füllgut;
wobei die einzelnen konstanten Frequenzen des Sendesignals innerhalb eines definierten Frequenzbandes verteilt sind;
**gekennzeichnet durch**
eine Steuerschaltung (117), eingerichtet zum Zerlegen des elektromagnetischen Sendesignals in zumindest zwei zeitlich voneinander getrennte Teilsignale, wobei das erste Teilsignal eine erste Teilmenge an Frequenzen aufweist und das zweite Teilsignal eine zweite Teilmenge an Frequenzen, wobei aus dem ersten Teilsignal erste Messwerte berechnet werden, aus dem zweiten Teilsignal zweite Messwerte, und aus der Kombination der ersten und zweiten Messwerte eine Echokurve.

2. Füllstandmessgerät nach Anspruch 1, wobei zwischen der Aussendung der Teilsignale in Richtung Füllgut die Signalquellenanordnung (101) deaktiviert ist.

3. Füllstandmessgerät nach Anspruch 2,
wobei die Frequenzen der Stufen des zweiten Teilsignals zwischen den Frequenzen der Stufen des ersten Teilsignals liegen.

4. Füllstandmessgerät nach einem der vorhergehenden Ansprüche,
wobei die Stufen im Mittelbereich des Sendesignals eine größere Zeitdauer aufweisen als die Stufen in den Randbereichen des Sendesignals.

5. Füllstandmessgerät nach einem der vorhergehenden Ansprüche,
wobei die Steuerschaltung (117) zur Durchführung der Änderung unter Verwendung benutzerseitig eingegebener oder vom Füllstandmessgerät erfasster Kenngrößen eingerichtet ist.

6. Füllstandmessgerät nach einem der vorhergehenden Ansprüche, weiter aufweisend:
eine Sende- und Empfangsschaltung (100), eingerichtet zum:
Aussenden des Sendesignals in Richtung einer Füllgutoberfläche;
Empfangen des an der Füllgutoberfläche reflektierten Sendesignals und heterodynes Mischen des empfangenen reflektierten Sendesignals mit einem Signal einer weiteren Signalquellenanordnung (108) zur Bildung eines reflexionsabhängigen Empfangssignals, aus welchem sich der Füllstand bestimmen lässt.

7. Füllstandmessgerät nach einem der vorhergehenden Ansprüche,
wobei die Füllstandmessphase zum Erfassen genau eines Füllstandmesswerts eingerichtet ist.

8. Füllstandmessgerät nach einem der vorhergehenden Ansprüche,
wobei die Steuerschaltung (117) eingerichtet ist zum Verbessern des Signal-Rausch-Verhältnisses durch Erhöhen der Zeitdauern der einzelnen Stufen.

9. Verfahren zur Füllstandbestimmung nach dem Reflektometerverfahren, aufweisend die folgenden Schritte:
Erzeugen eines elektromagnetischen Sendesignals während einer Füllstandmessphase;
wobei das Sendesignal gestuft frequenzmoduliert verläuft, wobei jede Stufe eine konstante Frequenz über eine Zeitdauer aufweist, die größer ist als die doppelte Laufzeit des Sendesignals von der Signalquellenanordnung zum Füllgut;
wobei die einzelnen konstanten Frequenzen des Sendesignals innerhalb eines definierten Frequenzbandes verteilt sind;
**gekennzeichnet durch**
Zerlegen des elektromagnetischen Sendesignals in zumindest zwei zeitlich voneinander getrennte Teilsignale, wobei das erste Teilsignal eine erste Teilmenge an Frequenzen aufweist und das zweite Teilsignal eine zweite Teilmenge an Frequenzen, wobei aus dem ersten Teilsignal erste Messwerte berechnet werden, aus dem zweiten Teilsignal zweite Messwerte, und aus der Kombination der ersten und zweiten Messwerte eine Echokurve.

10. Verfahren nach Anspruch 9, weiter aufweisend den Schritt:
Verbessern des Signal-Rausch-Verhältnisses durch Erhöhen der Zeitdauern der einzelnen Stufen.

11. Programmelement, das, wenn es auf einem Prozessor (117) eines Füllstandmessgeräts ausgeführt wird, das Füllstandradargerät veranlasst, die Schritte nach Anspruch 9 oder 10 durchzuführen.

12. Computerlesbares Medium, auf dem ein Programmelement nach Anspruch 10 gespeichert ist.

## Claims

1. Fill level measurement device configured for fill level measurement in accordance with the reflectometer method, comprising:
a signal source assembly (101) configured to generate an electromagnetic transmission signal during a fill level measurement phase;
wherein the transmission signal is frequency-modulated in steps, wherein each step comprises a constant frequency over a duration that is longer than twice the transit time of the transmission signal from the signal source assembly to the filling material;
wherein the individual constant frequencies of the transmission signal are distributed within a defined frequency band;
**characterized by**
a control circuit (117) configured to split the electromagnetic transmission signal into at least two temporally separated partial signals, wherein the first partial signal comprises a first subset of frequencies and the second partial signal comprises a second subset of frequencies, wherein first measured values are calculated from the first partial signal, second measured values are calculated from the second partial signal, and an echo curve are calculated from the combination of the first and second measured values.

2. Fill level measurement device according to claim 1,
wherein between the transmission of which partial signals towards the filling material the signal source assembly (101) is deactivated.

3. Fill level measurement device according to claim 2,
wherein the frequencies of the steps of the second partial signal are between the frequencies of the steps of the first partial signal.

4. Fill level measurement device according to any of the preceding claims,
wherein the steps in the central region of the transmission signal comprise a longer duration than the steps in the edge regions of the transmission signal.

5. Fill level measurement device according to any of the preceding claims,
wherein the control circuit (117) is configured to carry out the change using parameters entered by the user or detected by the level measuring device.

6. Fill level measurement device according to any of the preceding claims, further comprising:
a transmitting and receiving circuit (100), configured to:
transmit the transmission signal towards a filling material surface;
receive the transmission signal reflected on the filling material surface and carry out heterodyne mixing of the received reflected transmission signal with a signal of a further signal source assembly (108) to form a reflection-dependent reception signal from which the fill level can be determined.

7. Fill level measurement device according to any of the preceding claims,
wherein the fill level measurement phase is configured to detect exactly one fill level measurement value.

8. Fill level measurement device according to any of the preceding claims,
wherein the control circuit (117) is configured to improve the signal-to-noise ratio by increasing the durations of the individual steps.

9. Method for fill level determination in accordance with the reflectometer method, comprising the following steps:
generating an electromagnetic transmission signal during a fill level measurement phase;
wherein the transmission signal is frequency-modulated in steps, wherein each step comprises a constant frequency over a duration that is longer than twice the transit time of the transmission signal from the signal source assembly to the filling material;
wherein the individual constant frequencies of the transmission signal are distributed within a defined frequency band;
**characterized by**
splitting the electromagnetic transmission signal into at least two partial signals that are temporally separated from one another, wherein the first partial signal comprises a first subset of frequencies and the second partial signal comprises a second subset of frequencies, wherein first measured values are calculated from the first partial signal, second measured values are calculated from the second partial signal, and an echo curve are calculated from the combination of the first and second measured values

10. Method according to claim 9, further comprising the step:
improving the signal-to-noise ratio by increasing the durations of the individual steps.

11. Program element which, when executed on a processor (117) of a fill level measurement device, causes the fill level radar device to perform the steps according to claim 9 or 10.

12. Computer-readable medium on which a program element according to claim 10 is stored.

## Revendications

1. Dispositif de mesure de niveau de remplissage, qui est adapté pour mesurer le niveau de remplissage selon la procédure de réflectométrie, comportant :
un agencement de source de signal (101), adapté pour générer un signal d'émission électromagnétique pendant une phase de mesure de niveau de remplissage ;
dans lequel le signal d'émission est modulé en fréquence de manière étagée, dans lequel chaque étage présente une fréquence constante sur une durée qui est supérieure au double de la durée d'action du signal d'émission depuis l'agencement de source de signal jusqu'au matériau de remplissage ;
dans lequel les fréquences constantes individuelles du signal d'émission sont réparties au sein d'une bande de fréquence définie ;
**caractérisé par**
un circuit de commande (117), adapté pour scinder le signal d'émission électromagnétique en au moins deux signaux partiels séparés les uns des autres dans le temps, dans lequel le premier signal partiel présente une première quantité partielle de fréquences et le second signal partiel présente une seconde quantité partielle de fréquences, dans lequel des premières valeurs de mesure sont calculées à partir du premier signal partiel, des secondes valeurs de mesure sont calculées à partir du second signal partiel, et une courbe d'écho est calculée à partir de la combinaison des première et seconde valeurs de mesure.

2. Dispositif de mesure de niveau de remplissage selon la revendication 1 dans lequel, entre l'émission des signaux partiels en direction du matériau de remplissage, l'agencement de source de signal (101) est désactivé.

3. Dispositif de mesure de niveau de remplissage selon la revendication 2,
dans lequel les fréquences des étages du second signal partiel se situent entre les fréquences des étages du premier signal partiel.

4. Dispositif de mesure de niveau de remplissage selon une des revendications précédentes,
dans lequel les étages dans la zone médiane du signal d'émission présentent une durée plus longue que les étages dans les zones bord du signal d'émission.

5. Dispositif de mesure de niveau de remplissage selon une des revendications précédentes,
dans lequel le circuit de commande (117) est adapté pour réaliser une modification en utilisant des caractéristiques spécifiques données du côté de l'utilisateur ou détectées par le dispositif de mesure de niveau de remplissage.

6. Dispositif de mesure de niveau de remplissage selon une des revendications précédentes, présentant en outre :
un circuit d'émission et de réception (100), adapté pour :
émettre le signal d'émission en direction d'une surface de matériau de remplissage ;
recevoir le signal d'émission réfléchi au niveau de la surface de matériau de remplissage et mélanger de manière hétérodyne le signal d'émission réfléchi reçu avec un signal d'un autre agencement de source de signal (108) pour former un signal de réception qui dépend de la réflexion et à partir duquel le niveau de remplissage peut être défini.

7. Dispositif de mesure de niveau de remplissage selon une des revendications précédentes,
dans lequel la phase de mesure de niveau de remplissage est adaptée pour saisir précisément une valeur de mesure de niveau de remplissage.

8. Dispositif de mesure de niveau de remplissage selon une des revendications précédentes,
dans lequel le circuit de commande (117) est adapté pour améliorer le rapport signal-bruit en augmentant les durées des étages individuels.

9. Procédé de définition du niveau de remplissage selon la procédure de réflectométrie, présentant les étapes suivantes :
générer un signal d'émission électromagnétique pendant une phase de mesure de niveau de remplissage ;
le signal d'émission étant modulé en fréquence de manière étagée, dans lequel chaque étage présente une fréquence constante sur une durée qui est supérieure au double de la durée d'action du signal d'émission depuis l'agencement de source de signal jusqu'au matériau de remplissage ;
les fréquences constantes individuelles du signal d'émission sont étant au sein d'une bande de fréquence définie ;
**caractérisé par**
scinder le signal d'émission électromagnétique en au moins deux signaux partiels séparés les uns des autres dans le temps, dans lequel le premier signal partiel présente une première quantité partielle de fréquences et le second signal partiel présente une seconde quantité partielle de fréquences, dans lequel des premières valeurs de mesure sont calculées à partir du premier signal partiel, des secondes valeurs de mesure sont calculées à partir du second signal partiel, et une courbe d'écho est calculée à partir de la combinaison des première et seconde valeurs de mesure.

10. Procédé selon la revendication 9, présentant en outre l'étape :
améliorer le rapport signal-bruit en augmentant les durées des étages individuels.

11. Élément de programme qui, lorsqu'il est exécuté sur un processeur (117) d'un dispositif de mesure de niveau de remplissage, permet au dispositif radar de niveau de remplissage de réaliser les étapes selon la revendication 9 ou 10.

12. Support lisible par ordinateur, sur lequel est enregistré un élément de programme selon la revendication 10.
